# FASCICULE DE BREVET EUROPEEN

(11) **EP 3 033 823 B1**
(45) Date de publication et mention de la délivrance du brevet: **12.01.2022**
(21) Numéro de dépôt: 14739835.8
(22) Date de dépôt: 17.07.2014
(51) Int. Cl.: H02K 1/27, H02K 1/28, H02K 15/03

(54) **ROTOR POUR MACHINE ÉLECTRIQUE ET PROCÉDÉ DE RÉALISATION**
ROTOR FÜR EINE ELEKTRISCHE MASCHINE UND VERFAHREN ZUR HERSTELLUNG
ROTOR FOR AN ELECTRIC MACHINE, AND METHOD OF PRODUCTION

(30) Priorité: 14.08.2013 FR 1358022
(43) Date de publication de la demande: 22.06.2016
(73) Titulaire: Sonceboz Automotive SA, 2605 Sonceboz (CH)
(72) Inventeur: LAGORGETTE, Pascal, CH-2605 Sonceboz (CH); ANDRIEUX, Gaël, CH-2605 Evilard (CH); SIGG, Daniel, CH-2605 Sonceboz (CH)
(74) Mandataire: IP Trust
(86) Numéro de dépôt international: PCT/EP2014/065381
(87) Numéro de publication internationale: WO 2015/022140

(56) Documents cités:
- WO-A1-2005/099065
- DE-A1- 10 224 867
- DE-U1- 9 203 130
- GB-A- 2 494 788
- US-A- 4 641 422
- US-A1- 2006 071 563

## Description

### Domaine de l'invention

La présente invention concerne le domaine des machines électriques et plus particulièrement un organe mobile, notamment rotor et son procédé de réalisation, l'organe mobile étant constitué d'une culasse sur laquelle sont collés des aimants.

### Etat de la technique

On connaît, dans l'état de la technique, divers procédés de réalisation de rotors aimantés. Par exemple le brevet US5898990 qui présente une solution utilisant une culasse formée d'encoches pour le dépôt d'une colle. L'utilisation d'une culasse avec un coefficient d'expansion thermique différent de celle de la bague aimantée collée permet d'assurer un collage lors d'une montée en température de l'ensemble.

Par ailleurs, le brevet US7372181 présente une solution où la culasse supportant l'aimant présente une forme circulaire et des portions convexes qui correspondent avec une forme complémentaire de la bague aimantée présentant donc des renforcements. Les formes complémentaires permettent d'assurer un maintien après positionnement de l'aimant sur la culasse et d'assurer une transmission du couple mécanique entre aimant et culasse sans décollement relatif.

Le brevet US7642689 présente une solution où la culasse portant l'aimant se présente sous la forme d'un axe sur lequel est directement fixé, collé, une bague aimantée. Pour ce faire, la bague aimantée présente une forme intérieure de type hexagonale. Les portions plates intérieures de l'axe viennent en contact ponctuel avec l'axe générant une pluralité d'espace où une colle peut être placée et propagée sur l'axe par simple gravité. L'aimant présent par ailleurs sur une de ses extrémités une forme de cône tronqué, permettant l'insertion de la colle.

Plus récemment, le brevet GB2494788 propose un procédé de collage d'un aimant bague dans une frette extérieure par immersion et injection d'une colle par une portion centrale de la culasse creuse. Un axe agit comme un piston et un manchon entoure complétement l'ensemble culasse + aimant.

La demande de brevet US 2006/071563 présente un moteur sans balais compact, très précis et peu coûteux. Un palier est fixé à la périphérie intérieure d'une partie cylindrique d'un logement, et un arbre est inséré de manière rotative à travers le palier pour recouvrir le logement. Une culasse disposée à l'extrémité avant de la partie cylindrique du boîtier est fixée sur l'arbre. Dans cette configuration, le palier est agencé à une position à l'intérieur de la culasse, et par conséquent le moteur peut être réduit en taille dans la mesure de la superposition entre la culasse et le boîtier. Le palier est fixé à un élément du boîtier, et par conséquent, une grande précision est obtenue.

La demande de brevet US4641422 présente un moyeu d'un rotor à aimant permanent, qui comprend une partie de corps allongée en une seule pièce avec un alésage la traversant, un disque circulaire porté par la partie de corps entre ses extrémités, et une bague entourant la partie de corps et liée au disque circulaire.

La demande de brevet DE10224867 présente une machine électrique, en particulier machine sans balais, avec un rotor rotatif excité magnétiquement en permanence. Le rotor présente au moins un anneau magnétique tubulaire sur sa circonférence, dont les pôles magnétiques sont connectés à l'enroulement d'un stator entourant le rotor. Le rotor est fixé à un corps de support cylindrique, qui forme un trajet de retour magnétique des pôles magnétiques. Le corps de support est construit en plusieurs parties à partir d'un corps de base cylindrique et d'au moins une partie annulaire tubulaire, qui est poussée axialement sur une zone périphérique du corps de base située en dessous du au moins un anneau magnétique jusqu'à juste avant un épaulement radial du corps de support. Entre le au moins un anneau magnétique et le corps de support en plusieurs parties se trouvant un espace annulaire.

### Inconvénients des solutions de l'art antérieur

Les solutions de l'art antérieur présentent plusieurs inconvénients dont les principaux sont la nécessité de réaliser des formes complexes au rotor et/ou à l'aimant, l'existence d'un jeu sur les coefficients thermiques différents entre culasse et aimant, la nécessité de réaliser plusieurs étapes ralentissant la réalisation et augmentant son coût.

### Problèmes résolus par l'invention

La présente invention vise à remédier à ces inconvénients en proposant une solution permettant la réalisation simple et fiable d'un rotor aimanté avec les avantages suivants :
- permettre d'assembler des matériaux de coefficient de dilatation différent,
- assurer la concentricité de l'aimant bague par rapport à l'axe,
- permettre à la colle de se répartir sur le maximum de surface, de manière homogène sur le pourtour,
- pouvoir s'assurer de la quantité de colle entre l'aimant et la culasse,
- permettre l'emploi de colle de viscosité élevée,
- permettre d'accepter les tolérances élevées des aimants bagues,
- assurer un blocage en rotation de l'aimant sans avoir recours à des formes intérieures de l'aimant aux tolérances difficiles à réaliser,
- minimiser le nombre de pièces,
- permettre l'utilisation de pièces de révolution pour la culasse, réalisable par usinage,
- permettre de coller des aimants de grande longueur et diamètre.

### Solution apportée par l'invention

Pour pallier aux problèmes de l'art antérieur et apporter les avantages cités, l'invention propose un rotor pour machine électrique sans balai comprenant une culasse, un aimant moteur, et un piston, l'aimant moteur présentant un diamètre intérieure DA, la culasse présentant un diamètre extérieure DC2, le piston présentant un diamètre extérieure DP, tels que DA est supérieur aux diamètres DC2 et DP, l'aimant moteur étant collé à la culasse et au piston par un joint adhésif réparti entre les diamètres DA et DC2 et entre DA et DP, la culasse (3) présentant plusieurs diamètres notés DC1, en une première extrémité, DC2 sur la plus grande partie axiale et DC3 sur une deuxième extrémité, un cordon du joint adhésif (8) est déposé sur la culasse (3) dans le logement (11) généré par les différences diamètres DC1, DC2 et DA en la première extrémité du rotor, Caractérisé en ce que DC3>DC2>DC1, en ce que l'aimant moteur (4) est en appui sur la culasse (3) sur une surface (9) définie par la différence des diamètres DC3 et DC2 de la culasse (3), la culasse est prolongée sur sa deuxième extrémité par un nez (10) servant à faciliter la fixation de la culasse (3) sur l'axe (6), un aimant codeur (2) est collé sur la culasse (3) sur une surface de référence (13) orthogonale à l'axe de rotation du rotor (1) et généré par la différence du diamètre DC3 et le diamètre extérieur du nez (10) servant à la fixation de l'axe mécanique (6) à la culasse (3).

De préférence, ledit rotor présente une géométrie de révolution autour de l'axe de rotation ou translation du rotor comprenant un axe mécanique.

Selon une autre variante, la culasse est fixée sur l'axe (6) en appui sur une flasque supportant au moins un roulement (15) lié à l'axe (3).

L'invention concerne également un procédé de réalisation d'un rotor tel que défini dans les revendications précédentes caractérisé par les étapes suivantes :
- on fixe l'axe mécanique sur la culasse,
- on place l'aimant moteur en regard de la culasse,
- on place un joint adhésif sur la culasse,
- on écrase le joint adhésif à l'aide d'un piston permettant à l'adhésif de se répartir entre l'aimant moteur et la culasse et entre l'aimant moteur et le piston.

### Description détaillée des modes de réalisation

L'invention sera mieux comprise à la lecture de la description qui suit, se référant aux dessins annexés correspondant à un exemple non limitatif de réalisation, concernant un moteur rotatif, bien que l'invention ne soit pas limitée à un moteur rotatif mais s'étende aussi à un moteur linéaire, où :
- les figures 1a et 1b représentent respectivement une vue de trois-quarts et une vue de coupe du rotor suivant un premier mode de réalisation et selon un plan passant par l'axe de rotation,
- la figure 2 représente une vue de coupe de la culasse et de l'axe du rotor suivant le premier mode de réalisation,
- la figure 3 représente une vue de coupe de la culasse, de l'axe et de l'aimant du rotor suivant le premier mode de réalisation,
- la figure 4 représente une vue de détail de coupe du rotor suivant le premier mode de réalisation où le joint adhésif est positionné dans un logement de la culasse sur une extrémité axiale,
- la figure 5 représente une vue de détail de coupe du rotor suivant le premier mode de réalisation où le piston est en approche du joint adhésif,
- la figure 6 représente une vue de coupe du rotor suivant le premier mode de réalisation où le piston est en appui avec la culasse,
- la figure 7 représente une vue de coupe du rotor suivant le premier mode de réalisation où un aimant codeur est installé,
- la figure 8 représente une vue éclatée du rotor suivant le premier mode de réalisation avec un aimant codeur,
- les figures 9a, 9b et 9c représentent un rotor suivant un mode de réalisation ne faisant pas partie de la présente invention respectivement suivant une vue de perspective, un plan de coupe passant par l'axe de rotation et une vue isolée de coupe,
- les figures 10a, 10b et 10c représentent un rotor suivant un mode de réalisation ne faisant pas partie de la présente invention respectivement suivant une vue de perspective et deux vues de coupe passant par l'axe de rotation.
- la figure 11 représente une vue d'un actionneur linéaire ne faisant pas partie de la présente invention.

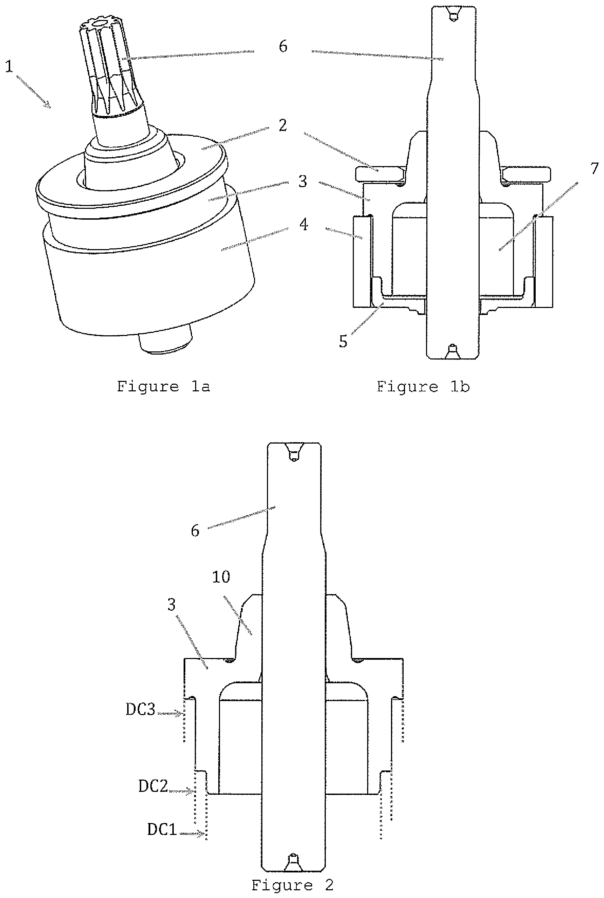

Le rotor (1) défini par l'invention dans un premier mode de réalisation est présenté en figure la dans une vue de perspective et en figure 1b selon une vue en coupe suivant l'axe de rotation du rotor (1) qui est un axe d'axi-symétrie.

Ce rotor (1) est constitué d'un axe (6) mécanique destiné à entrainer un organe extérieur non montré, d'une culasse (3) généralement ferromagnétique, même si la présente invention peut s'imaginer avec une culasse (3) amagnétique, d'un aimant moteur (4), d'un piston (5) et un aimant codeur (2), l'aimant codeur (2), servant à un capteur de position pouvant piloter le moteur électrique, n'étant pas non plus nécessaire à la présente invention mais constituant une réalisation préférée.

La culasse (3) présente trois tronçons coaxiaux, de sections décroissantes. Le tronçon médian présente une section extérieure correspondant à la section intérieure de l'aimant (4).

L'aimant (4) présente une hauteur supérieure à la hauteur du segment médian. Il forme ainsi une jupe dépassant le tronçon médian de la culasse (3) et définissant, avec le troisième segment de la culasse (3), un espace tubulaire dans lequel vient se loger la périphérie tubulaire du piston (5).
Les figures 2 à 6 sont les vues isolées du rotor (1) dans les étapes chronologiques de sa réalisation.
La figure 2 montre la culasse (3) montée sur l'axe (6), généralement chassé mécaniquement ou bien fixer par goupille ou par soudure ou par tout autre moyen classique de fixer une culasse à un axe mécanique.

Avantageusement, la culasse (3) présente plusieurs diamètres notés DC1, en une première extrémité, DC2 sur la plus grande partie axiale et DC3 sur une partie supérieure. De manière préférentielle, la culasse est prolongée sur sa deuxième extrémité par un nez (10) servant à faciliter la fixation de la culasse (3) sur l'axe (6).

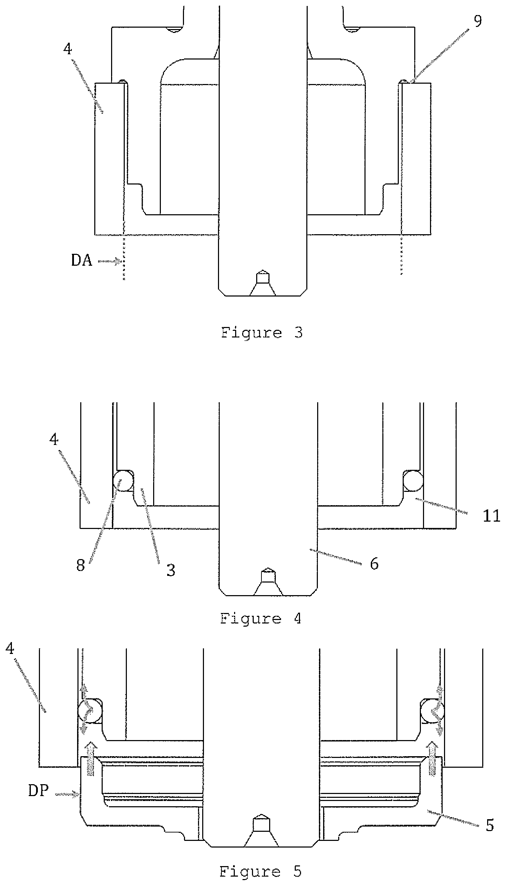

En deuxième étape, comme présenté en figure 3, l'aimant moteur (4) est positionné sur la culasse (3) en appui de celle-ci sur la surface d'appui (9) définie par la différence entre les diamètres DC2 et DC3. Dans cette deuxième étape, l'aimant moteur (4) est simplement positionné. Cet aimant moteur (4) présente un diamètre interne DA tel que DC3>DA>DC2. L'existence du diamètre DC3 est propre à ce premier mode de réalisation mais n'est pas nécessaire dans l'invention dans le sens où le maintien de l'aimant moteur (4) dans une position axiale peut être réalisé lors du procédé de réalisation par un organe extérieur. En effet, même si la culasse (3) de ce premier mode de réalisation permet une réalisation facilité, la proximité de la surface d'appui (9), généralement ferromagnétique, favorise un chemin de fuite magnétique par lequel se boucle le champ magnétique généré par l'aimant moteur (4) est dégrade ainsi légèrement le facteur de force du moteur. Ainsi, l'arrêt axial de l'aimant moteur (4) pourra aussi être fait lors du procédé de réalisation et se retirer après réalisation.

La figure 4 présente une vue isolée du rotor (1) dans une troisième étape où un cordon de joint adhésif (8), dont la forme peut différer selon l'outil qui le met en place, est déposé sur la culasse (3) dans le logement (11) généré par les différents diamètres DC1, DC2 et DA en la première extrémité du rotor. L'accès par cette première extrémité est facile car dégagée et le joint adhésif peut être installé sur toute l'excursion angulaire du logement (11) ou partiellement. Le joint adhésif (8) est par exemple, mais de manière non limitative, une colle de type silicone, par exemple la colle commercialisée par HENKEL (marque) sous la dénomination commerciale Loctite 5910 (nom commercial).

Dans une quatrième étape, et comme présenté en figure 5, le piston (5) est amené en regard du joint adhésif (8). Les flèches verticales sur le piston (5) indiquent le déplacement axial qui est réalisé par le piston (5) vers le rotor (1) en construction. Les doubles flèches sur le joint adhésif (8) symbolisent le flux du joint adhésif (8) qui va se dérouler lors de l'écrasement par le piston (5) de ce joint adhésif (8). Ce piston (5) présente un diamètre externe (DP) qui est tel que DA>DP. Ce diamètre DP est de l'ordre de grandeur du diamètre DC2 de la culasse (3) mais il peut être légèrement plus grand, comme par exemple montré sur ce premier mode de réalisation, ou plus petit suivant la géométrie choisie.

Les tolérances de réalisation sont importantes dans le procédé et, bien qu'elles puissent varier d'une réalisation à une autre en fonction notamment de la taille de l'ensemble à réaliser et de la viscosité de la colle utilisée, on peut par exemple donner les valeurs suivantes, à titre d'exemple:
DC3 = 24mm
DA = 22mm
DP = 21.7mm
DC2 = 21.5mm
DC1 = 19.1mm

Ainsi, pour des réalisations de pièces de quelques dizaines de millimètres, des différences de diamètre de quelques dixièmes de millimètres sont à considérer. Une tolérance de réalisation des pièces constitutives inférieure au dixième de millimètre est alors à prévoir. Ces tolérances peuvent légèrement évoluer suivant le facteur de forme du rotor (1) réalisé.

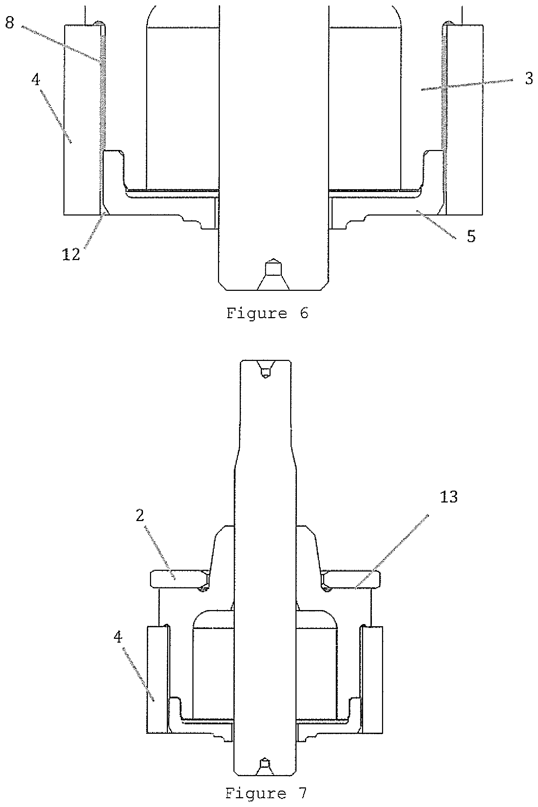

Lorsque le piston (5) a écrasé le joint adhésif (8) pour venir en contact avec la culasse (3), le joint adhésif (8) s'est déformé pour se répartir dans l'espace entre l'aimant moteur (4) et la culasse (3) et entre l'aimant moteur (4) et le piston (5), comme représenté en figure 6. Cette opération, grâce à un effet piston efficace, permet ainsi de garantir une bonne et aisée répartition d'adhésif permettant de fixer avec fiabilité l'aimant moteur (4) à la culasse (3) et de fixer aussi le piston (5) solidairement à la culasse (3) et l'aimant moteur (4). Les zones pleines symbolisent l'adhésif (8) réparti uniformément.

De manière non limitative, afin de favoriser une fixation plus solide du piston (5) relativement à l'aimant moteur (4), un adhésif peut être déposé dans une gorge (12) réalisée entre le piston (5) et l'aimant moteur (4) sur la première extrémité du rotor (1).

De même, afin de garantir les performances du moteur, le piston (5) et la culasse (3) seront réalisés dans le même matériau magnétique ou des matériaux ayant des propriétés magnétiques voisines.

En dernière étape de réalisation, facultative lorsqu'il n'y a pas utilisation d'un aimant codeur, consiste à venir fixer (par exemple par collage) l'aimant codeur (2) sur une surface de référence (13) orthogonale à l'axe de rotation du rotor (1) et généré par la différence du diamètre DC3 et le diamètre extérieur du nez (10) servant à la fixation de l'axe mécanique (6) à la culasse (3).

Ainsi constitué, le rotor supporte, sur la même culasse, les aimants codeurs (2) et moteurs (4), garantissant une indexation parfaite de l'un par rapport à l'autre dans une réalisation compacte et fiable.

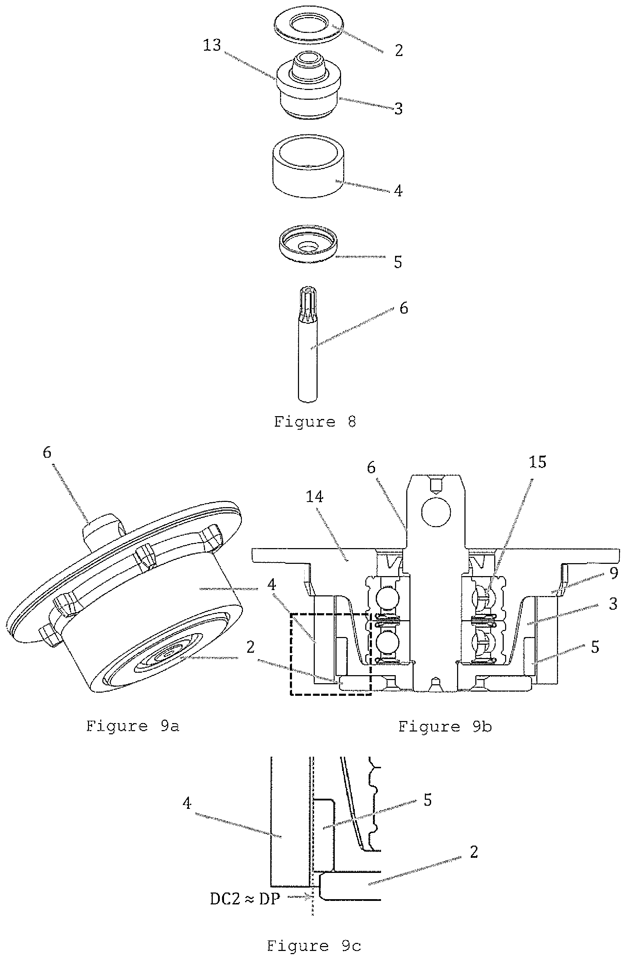

La figure 8 présente, dans une vue éclatée, tous les éléments cités plus haut, avec une visualisation des différentes polarités magnétiques des aimants codeur (2) et moteur (4), l'alternance de parties sombre et claire sur ces éléments symbolisant une polarité magnétique (Nord ou Sud) différente.

Les figures 9a, 9b et 9c présentent un mode de réalisation ne faisant pas partie de la présente invention. Ici, la surface d'appui (9) est générée par une flasque (14), généralement en matière plastique, supportant un ou des roulements (15) solidaires de l'axe (6). La culasse (3) est alors positionnée centrée sur l'axe (3) en appui sur la flasque (14), l'aimant ensuite positionné en appui sur la flasque (14), puis le joint adhésif (8) est déposé et enfin le piston (5) est amené pour répartir par pression le joint adhésif entre l'aimant moteur (4) et la culasse (3) et le piston (5). Dans ce mode de réalisation, le diamètre DC2 de la culasse (3) est de l'ordre de grandeur du diamètre DP du piston (5).

Dans ce second mode de réalisation, l'aimant codeur (2) est installé du côté axial où le piston (5) a été introduit, sur la première extrémité du rotor (1).

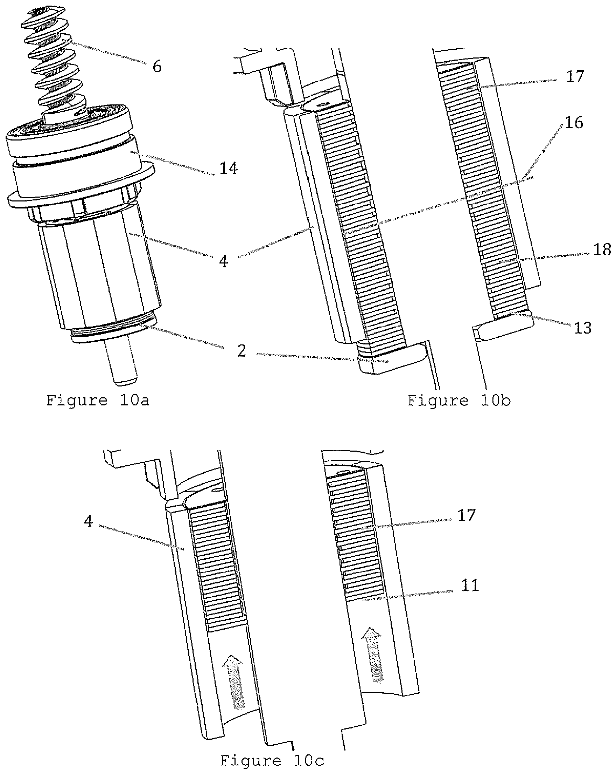

Les figures 10a, 10b et 10c présentent un mode de réalisation ne faisant pas partie de la présente invention.

Comme dans le mode précédent, le rotor (1) est constitué d'une flasque (14) contenant un ou des roulements (15) - non visible ici - et la culasse (3) est formée par un premier (17) et deuxième (18) empilement de tôles ferromagnétiques. Ces empilements (17) et (18) sont efficaces pour diminuer les pertes électromagnétiques dites « pertes fer » du moteur. Dans ce mode de réalisation, le deuxième empilement de tôles (18) sert aussi de piston (5). Sur la figure 10b, la ligne fictive (16) visualise la séparation des premier (17) et deuxième (18) empilements de tôles.

Comme présenté en figure 10c correspondant à une étape de réalisation où l'aimant moteur (4) et le premier empilement de tôles (17) ont été positionné respectivement par un organe d'indexation extérieur et chassé sur l'axe (3). Les flèches, de direction axiale, montre la direction d'assemblage du rotor (1).

Cette figure 10c montre l'étape de réalisation qui est suivie par le dépôt du joint adhésif sur l'extrémité inférieure du premier empilement de tôles (17) puis de l'insertion du deuxième empilement de tôles (18) agissant alors comme le piston (5) décrit dans les modes précédents. Toutes les étapes de réalisation ne sont pas montrées mais sont aisément reproductibles et imaginés par le lecteur grâce à la description plus détaillée du premier mode de réalisation.

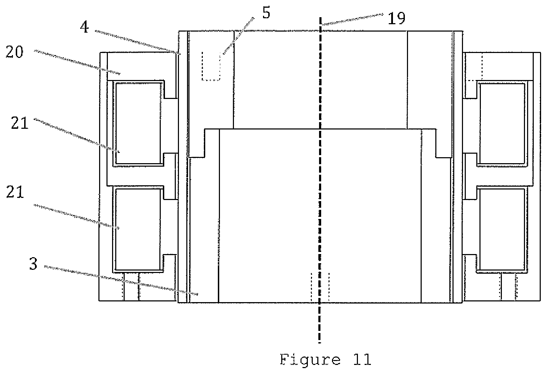

La figure 11 présente un actionneur à entrainement direct à déplacement linéaire ne faisant pas partie de la présente invention.

Cet actionneur est similaire à actionneur tel que décrit dans EP0607354 et présente un premier ensemble formé d'un stator (20) et 2 bobines électriques, ainsi qu'un deuxième ensemble formé d'un rotor suivant l'invention. Le rotor se déplace relativement au premier ensemble suivant l'axe de translation (19) qui est aussi l'axe de révolution de la géométrie de l'actionneur. On retrouve ainsi la culasse (3), le piston (5) et l'aimant moteur (4). Le joint adhésif, non montré sur cette figure, se répartit ainsi, entre l'aimant moteur (4) et la culasse (3) et entre l'aimant moteur (4) et le piston (5) par écrasement du joint par le piston (5) sur la culasse (3).

Dans le mode de réalisation montré, non limitatifs, la hauteur de l'aimant moteur (4), hauteur considérée dans la direction de l'axe de rotation ou de translation, est sensiblement égale à la hauteur cumulée de la culasse (3) et du piston (5), une fois assemblés.

## Revendications

1. Rotor (1) pour machine électrique sans balai comprenant une culasse (3), un aimant moteur (4), et un piston (5) l'aimant moteur (4) présentant un diamètre intérieur DA, la culasse (3) présentant un diamètre extérieur DC2, le piston (5) présentant un diamètre extérieur DP, tels que DA est supérieur aux diamètres DC2 et DP, l'aimant moteur (4) étant collé à la culasse (3) et au piston (5) par un joint adhésif réparti entre les diamètres DA et DC2 et entre DA et DP, la culasse (3) présentant plusieurs diamètres notés DC1, en une première extrémité, DC2 sur la plus grande partie axiale et DC3 sur une deuxième extrémité, un cordon du joint adhésif (8) est déposé sur la culasse (3) dans le logement (11) généré par les différences diamètres DC1, DC2 et DA en la première extrémité du rotor, **caractérisé en ce que** DC3>DC2>DC1, **en ce que** l'aimant moteur (4) est en appui sur la culasse (3) sur une surface (9) définie par la différence des diamètres DC3 et DC2 de la culasse (3), la culasse est prolongée sur sa deuxième extrémité par un nez (10) servant à faciliter la fixation de la culasse (3) sur l'axe (6), un aimant codeur (2) est collé sur la culasse (3) sur une surface de référence (13) orthogonale à l'axe de rotation du rotor (1) et généré par la différence du diamètre DC3 et le diamètre extérieur du nez (10) servant à la fixation de l'axe mécanique (6) à la culasse (3).

2. Rotor selon la revendication 1 **caractérisé en ce qu'**il présente une géométrie de révolution autour de l'axe de rotation ou translation du rotor (1) comprenant un axe mécanique (6).

3. Rotor (1) selon la revendication 1 ou 2 **caractérisé en ce que** la culasse est fixée sur l'axe (6) en appui sur un flasque (14) supportant au moins un roulement (15) lié à l'axe (3).

4. Procédé de réalisation d'un rotor (1) tel que défini dans les revendications précédentes **caractérisé par** les étapes suivantes :
- on fixe l'axe mécanique (6) sur la culasse (3),
- on place l'aimant moteur (4) en regard de la culasse,
- on place un joint adhésif sur la culasse (3),
- on écrase le joint adhésif à l'aide d'un piston (5) permettant à l'adhésif de se répartir entre l'aimant moteur (4) et la culasse (3) et entre l'aimant moteur (4) et le piston (5).

## Patentansprüche

1. Rotor (1) für eine bürstenlose elektrische Maschine, die einen Zylinderkopf (3), einen Motormagnet (4) und einen Kolben (5) umfasst, wobei der Motormagnet (4) einen Innendurchmesser DA aufweist, der Zylinderkopf (3) einen Außendurchmesser DC2 aufweist, der Kolben (5) einen Außendurchmesser DP derart aufweist, dass DA größer als die Durchmesser DC2 und DP ist, wobei der Motormagnet (4) durch eine Klebeverbindung, die zwischen den Durchmessern DA und DC2 und zwischen DA und DP verteilt ist, an den Zylinderkopf (3) und den Kolben (5) geklebt ist, wobei der Zylinderkopf (3) mehrere Durchmesser aufweist, die an einem ersten Ende mit DC1, bei dem größten axialen Teil mit DC2 und bei einem zweiten Ende mit DC3 bezeichnet werden, ein Wulst der Klebeverbindung (8) an dem Zylinderkopf (3) in der Aufnahme (11) angeordnet ist, die durch die Differenzen der Durchmesser DC1, DC2 und DA an dem ersten Ende des Rotors erzeugt wird, **dadurch gekennzeichnet, dass** DC3 > DC2 > DC1, dass der Motormagnet (4) an dem Zylinderkopf (3) an einer Oberfläche (9) anliegt, die durch die Differenz der Durchmesser DC3 und DC2 des Zylinderkopfs (3) definiert wird, wobei der Zylinderkopf an seinem zweiten Ende durch einen Fortsatz (10) verlängert wird, der dazu dient, die Befestigung des Zylinderkopfs (3) an der Welle (6) zu ermöglichen, ein Codierermagnet (2) an den Zylinderkopf (3) auf eine Referenzoberfläche (13) geklebt ist, die zu der Rotationsachse des Rotors (1) orthogonal ist und durch die Differenz des Durchmessers DC3 und des Außendurchmesser des Fortsatzes (10) erzeugt wird, der zur Befestigung der mechanischen Welle (6) an dem Zylinderkopf (3) dient.

2. Rotor nach Anspruch 1, **dadurch gekennzeichnet, dass** er eine Rotationsgeometrie um die Rotations- oder Translationsachse des Rotors (1), der eine mechanische Welle (6) umfasst, aufweist.

3. Rotor (1) nach Anspruch 1 oder 2, **dadurch gekennzeichnet, dass** der Zylinderkopf an der Welle (6) in Anlage an einem Flansch (14) befestigt ist, der mindestens ein Lager (15) trägt, das mit der Welle (6) verbunden ist.

4. Verfahren zur Herstellung eines Rotors (1) nach den vorstehenden Ansprüchen, **gekennzeichnet durch** folgende Schritte:
- Befestigen der mechanischen Welle (6) an dem Zylinderkopf (3),
- Platzieren des Motormagnets (4) gegenüber dem Zylinderkopf,
- Platzieren einer Klebeverbindung an dem Zylinderkopf (3),
- Quetschen der Klebeverbindung mit Hilfe eines Kolbens (5), wodurch sich das Klebemittel zwischen dem Motormagnet (4) und dem Zylinderkopf (3) sowie zwischen dem Motormagnet (4) und dem Kolben (5) verteilen kann.

## Claims

1. Rotor (1) for a brushless electric machine, comprising a cylinder head (3), a motor magnet (4), and a piston (5), the motor magnet (4) having an internal diameter DA, the cylinder head (3) having an external diameter DC2, the piston (5) having an external diameter DP, such that DA is greater than the diameters DC2 and DP, the motor magnet (4) being bonded to the cylinder head (3) and to the piston (5) by an adhesive seal distributed between the diameters DA and DC2 and between DA and DP, the cylinder head (3) having a plurality of diameters denoted DC1 at a first end, DC2 on the largest axial part and DC3 on a second end, a bead of the adhesive seal (8) being placed on the cylinder head (3) in the housing (11) generated by the differences between the diameters DC1, DC2 and DA at the first end of the rotor, **characterized in that** DC3>DC2>DC1, **in that** the motor magnet (4) is resting on the cylinder head (3) on a surface (9) defined by the difference between the diameters DC3 and DC2 of the cylinder head (3), the cylinder head is extended on its second end by a nose (10) used to facilitate attaching the cylinder head (3) on the shaft (6), and a coding magnet (2) is bonded to the cylinder head (3) on a reference surface (13) orthogonal to the axis of rotation of the rotor (1) and generated by the difference between the diameter DC3 and the external diameter of the nose (10) used to attach the mechanical shaft (6) to the cylinder head (3).

2. Rotor according to claim 1, **characterized in that** it has a rotationally symmetrical shape about the axis of rotation or translation of the rotor (1) comprising a mechanical shaft (6).

3. Rotor (1) according to either claim 1 or claim 2, **characterized in that** the cylinder head is attached on the shaft (6) so as to rest on a flange (14) supporting at least one bearing (15) linked to the shaft (6).

4. Method for producing a rotor (1) as defined in the preceding claims, **characterized by** the following steps:
- the mechanical shaft (6) is fixed on the cylinder head (3),
- the motor magnet (4) is placed opposite the cylinder head,
- an adhesive seal is placed on the cylinder head (3),
- the adhesive seal is crushed using a piston (5), allowing the adhesive to be distributed between the motor magnet (4) and the cylinder head (3) and between the motor magnet (4) and the piston (5).
